# EUROPÄISCHE PATENTSCHRIFT

(11) **EP 1 537 178 B1**
(45) Veröffentlichungstag und Bekanntmachung des Hinweises auf die Patenterteilung: **03.05.2006**
(21) Anmeldenummer: 03757766.5
(22) Anmeldetag: 29.08.2003
(51) Int. Cl.: C08L 67/02

(54) **VERFAHREN ZUR HERSTELLUNG VON THERMOPLASTISCHE POLYESTERFORMMASSEN**
PROCESS FOR THE PREPARATION OF THERMOPLASTIC POLYESTER MOULDING MASSES
PROCEDE POUR LA PREPARATION DES MATIERES A MOULER THERMOPLASTIQUES A BASE DE POLYESTERS

(30) Priorität: 04.09.2002 DE 10241297
(43) Veröffentlichungstag der Anmeldung: 08.06.2005
(73) Patentinhaber: BASF Aktiengesellschaft, 67056 Ludwigshafen (DE)
(72) Erfinder: GEPRÄGS, Michael, 01987 Schwarzheide (DE)
(86) Internationale Anmeldenummer: PCT/EP2003/009598
(87) Internationale Veröffentlichungsnummer: WO 2004/022648

(56) Entgegenhaltungen:
- US-A- 5 251 064
- US-A1- 2002 075 686

## Beschreibung

Die Erfindung betrifft ein Verfahren zur Herstellung von thermoplastischen Formmassen enthaltend
A) 10 bis 89,9 Gew.-% eines thermoplastischen Polyesters mit einer Viskositätszahl (VZ) von mindestens 145 ml/g
B) 10 bis 89,99 Gew.-% eines thermoplastischen Polyesters mit einer Viskositätszahl (VZ) von maximal 135 ml/g
C) 0,01 bis 5 Gew.-% mindestens eines Nukleierungsmittels
D) 0 ist 5 Gew.-% mindestens eines Schmiermittels
E) 0 bis 70 Gew.-% weiterer Zusatzstoffe, wobei die Summe der Gewichtsprozente der Komponenten A) bis E) 100 % ergibt, dadurch gekennzeichnet, dass man die Komponenten A) bis C) sowie gegebenenfalls D) und/oder E) mischt, in Gegenwart von Wasser konfektioniert, entgast, austrägt, abkühlt oder granuliert.

Mischungen aus Polyestern unterschiedlicher Viskosität sind bekannt. Bei der Verarbeitung treten jedoch oft Probleme bezüglich der Stabilität auf, welche durch Zugabe unterschiedlicher Stabilisatoren meist beeinflußt wird. Bei Anwendungen als Automobilscheinwerfer werden neben einer hohen Wärmeformbeständigkeit und Dimensionsstabilität ein sehr geringes fogging Verhalten gefordert sowie eine kostengünstige Metallisierbarkeit der Formteile gewünscht.

Unter fogging Verhalten versteht man die Belagbildung auf der Scheinwerferlinse, die nach thermischer Belastung des Scheinwerferreflektors bzw. -Blende durch Ausgasung leichtflüchtiger fester Anteile entstehen kann.

Bislang bestehen die im KFZ-Bereich verwendeten Scheinwerferblenden aus bulk molded compounds (BMC), Thermoplasten wie Polycarbonat, Polyethersulfon, Polyamid, (PA6 + PA66), Hochtemperatur-Polycarbonat.

Nachteilig bei diesen Blenden ist
- bei BMC die hohe Ausschußquote aufgrund mangelnder Prozeßanpassungsmöglichkeit bei Duroplasten
- mangelnde Dimensionsstabilität durch Wasseraufnahme bei PA
- HT-PC und PC erfordern eine Vorbehandlung des Spritzlings vor Metallisierung
- Polyethersulfon weist höhere Dichte auf.

Aufgabe der vorliegenden Erfindung war es daher, Polyesterformmassen zur Verfügung zu stellen, die die o.g. Nachteile minimieren und einfach herstellbar sind.

Demgemäß wurde das eingangs definierte Verfahren zur Herstellung von Formmassen gefunden. Bevorzugte Ausführungsformen sind den Unteransprüchen zu entnehmen.

Als Komponente (A) enthalten die erfindungsgemäß herstellbaren Formmassen 10 bis 89,9, bevorzugt 20 bis 85 und insbesondere 30 bis 80 Gew.-% eines thermoplastischen Polyesters mit einer Viskositätszahl von mindestens 145 ml/g, bevorzugt mind. 150 und insbesondere mind. 155 ml/g.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäüren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) wird im allgemeinen in einer 0,5 gew.-%igen Lösung in einem Phenol/o-Dichlorbenzolgemisch (Gew.-Verh. 1:1 bei 25°C) gemäß ISO 1628 gemessen.

Bevorzugt sind Polyester, deren Carboxylendgruppengehalt größer als 15 mval/kg, insbesondere bevorzugt größer als 18 mval/kg beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:
1) sog. Post Industrial Rezyklat: hierbei handelt es sich um Produktionsabfälle bei der Polykondensation oder bei der Verarbeitung z.B. Angüsse bei der Spritzgußverarbeitung, Anfahrware bei der Spritzgußverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 6 mm, vorzugsweise kleiner 5 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 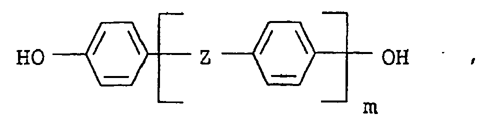 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Komponente B) enthalten die erfindungsgemäß herstellbaren Formmassen 10 bis 89,9, vorzugsweise 20 bis 85 und insbesondere 30 bis 80 Gew.-% eines thermoplastischen Polyesters mit einer Viskositätszahl von maximal 135 ml/g, bevorzugt maximal 133 und insbesondere maximal 130 ml/g.

Aufbau und Herstellung der Komponente B) entsprechen den Ausführungen zu Komponente A), weshalb wegen weiterer Einzelheiten auf diese Ausführungen verwiesen sei.

Die VZ der Polyester B wird im allgemeinen in einer 0,5 gew.-%igen Lösung in einem Phenol/o-Dichlorbenzolgemisch (Gew.-Verhalten 1:1 bei 25°C gemäß ISO 1628 gemessen. Die VZ der Komponente B) beträgt mindestens 90 ml/g, bevorzugt mindestens 100 ml/g und insbesondere mindestens 107 ml/g.

Insbesondere bevorzugte Verhältnisse A) zu B) betragen 70:30 bis 30:70 und ganz besonders bevorzugt 40:60 bis 60:40.

Die Differenz der VZ von A) zu B) beträgt vorzugsweise 10, insbesondere 25 - 35 ml/g.

Der Carboxylgruppengehalt der Komponente B) beträgt vorzugsweise bis zu 30 mval/kg und insbesondere bis zu 28 mval/kg.

Besonders bevorzugte Mischungen sind PET mit PBT und PBT als Komponenten A) und B).

Als Komponente C) enthalten die erfindungsgemäß herstellbaren Formmassen 0,01 bis 5 Gew.-%, vorzugsweise 0,05 bis 1 Gew.-% und insbesondere 0,1 bis 0,5 Gew.-% eines Nukleierungsmittels.

Als Nukleierungsmittel kommen alle bekannten Verbindungen in Frage, beispielsweise Borverbindungen wie Bornitrid, Kieselsäure, Pigmente wie z.B. Heliogenblau ® (Kupferphthalocyaninpigment; eingetragene Marke der BASF Aktiengesellschaft), Russe, Magnesiumsulfat, Glimmer, Magnesiumoxid, Titandioxid-Rutil und Anatas-Modifikation.

Insbesondere wird als Nukleierungsmittel Talkum verwendet, welches ein hydratisiertes Magnesiumsilikat der Zusammensetzung Mg₃[(OH)₂/Si₄O₁₀] oder 3 MgO · 4 SiO₂ · H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse bestimmt und beträgt vorzugsweise:

| | |
|---|---|
| < 20 µm | 100 Gew.-% |
| < 10 µm | 99 Gew.-% |
| < 5 µm | 85 Gew.-% |
| < 3 µm | 60 Gew.-% |
| < 2 µm | 43 Gew.-% |

Derartige Produkte sind im Handel als Micro-Talc I.T. extra (Fa. Norwegian Talc Minerals) erhältlich.

Als Komponente D) können die erfindungsgemäß herstellbaren Formmassen 0 bis 5, insbesondere 0,01 bis 5, vorzugsweise 0,05 bis 1 und insbesondere 0,1 bis 0,5 Gew.-% mindestens eines Schmiermittels enthalten. Bevorzugte Schmiermittel sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Ethylenglykol, Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Die erfindungsgemäßen Formmassen können bis zu 70, vorzugsweise bis zu 40 und insbesondere bis zu 30 Gew.-% weiterer Zusatzstoffe E) enthalten.

Weitere Zusatzstoffe E) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tri-cyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹-C (COOR²) =C (COOR³) R⁴ (I)

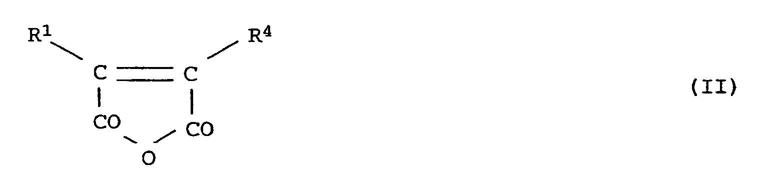

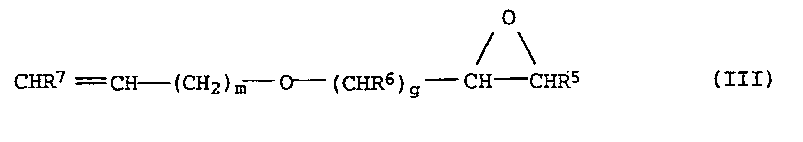

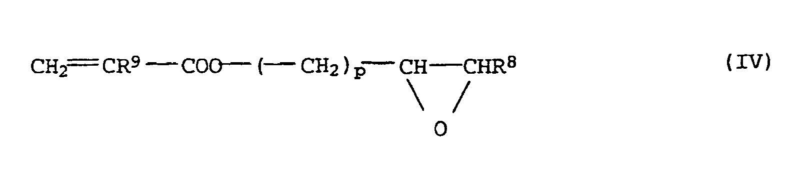

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/ oder Glycidylmethacrylat, (Meth)acrylsäure und/oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copalymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 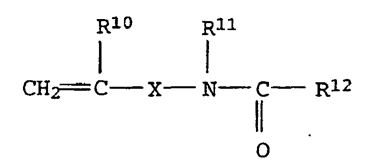 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆₋C₁₂-Arylengruppe oder 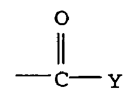
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe (Komponente E)) seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere 1 bis 50 %, vorzugsweise 5 bis 40 und insbesondere 15 bis 35 Gew.-% eingesetzt werden.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X- (CH₂)ₙ)ₖ-Si-(O-CₘH₂ₘ₊₁)₄₋ₖ

in der die Substituenten folgende Bedeutung haben:
- X: NH₂-, 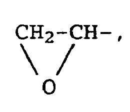 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Es können anorganische Pigmente, wie Ultramarinblau, Eisenoxid, Titandioxid, Zinksulfid und Ruß, weiterhin organische Pigmente, wie Phthalocyanine, Chinacridone, Perylene sowie Farbstoffe, wie Nigrosin und Anthrachinone als Farbmittel zugesetzt werden sowie beliebige Flammschutzmittel, welche dem Fachmann geläufig sind.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. In einer bevorzugten Ausführungsform können insbesondere die Komponenten A) und B) vorab als Granulat gemischt werden.

Das erfindungsgemäße Herstellverfahren verringert zusätzlich die Fogging-Neigung und ist dadurch gekennzeichnet, daß man die Komponenten A) bis C) sowie gegebenenfalls D) und/oder E) mischt, in Gegenwart von Wasser konfektioniert, entgast austrägt, abkühlt und granuliert. Bevorzugt erfolgt die Zugabe von Wasser in Mengen von 0,1 bis 2, vorzugsweise von 0,1 bis 1,5 Gew.-%, bezogen auf 100 Gew.-% der Komponenten A) und B).

Insbesondere bevorzugt erfolgt die Zugabe von Wasser zur bereits homogenisierten Schmelze der übrigen Komponenten. Die Mischtemperaturen liegen in der Regel bei 230 bis 290°C.

Nach einer bevorzugten Arbeitsweise können die Komponenten C) bis E) mit einem Polyesterpräpolymeren A) oder B) gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bzw. B) bis zur gewünschten Viskosität kondensiert.

Die erfindungsgemäß herstellbaren thermoplastischen Formmassen zeichnen sich durch gute Dimensionsstabilität und hohe Wärmeformbeständigkeit sowie geringes Fogging-Verhalten aus. Daher eignen diese sich insbesondere für Anwendungen im KFZ-Bereich, wobei als besonders bevorzugte Anwendung Scheinwerferblenden genannt seien.

### Beispiele

Komponente A: Polybutylenterephthalat (PBT)mit einer Viskositätszahl (VZ) von 157 ml/g und einem Carboxylendgruppengehalt von 33 mval/kg (VZ gemessen in 0,5 gew.-%iger Lösung aus Phenol/o-Dichlorbenzol, 1:1-Mischung bei 25°C gemäß ISO 1628).

Komponente B: Polybutylenterephthalat (PBT)mit einer Viskositätszahl von 130 ml/g und einem Carboxylendgruppengehalt von 25 mval/kg (VZ gemessen in 0,5 gew.-%iger Lösung aus Phenol/o-Dichlorbenzol, 1:1-Mischung bei 25°C gemäß ISO 1628).

### Komponente C: Talkum

Komponente D1: Glycerindistearat (Loxiol® VPG 1206 der Firma Cognis GmbH)
Komponente D2: Triglycerid mit Fettsäuren (Loxiol® EP 218 der Firma Cognis GmbH)
Kompente E1: Batch aus 20 Gew.-% Ruß (mittlere Teilchengröße d₅₀ < 20 µm) und 80 Gew.-% PBT mit VZ 130 ml/g
Komponente E2: Batch aus 40 Gew.-% Ruß und 60 Gew.-% Polyethylen

### Herstellung der Formassen

Die Komponente A) bis E) wurden in den in der Tabelle angegebenen Mengenverhältnissen auf einem Extruder bei 260°C gemischt, homogenisiert, granuliert und getrocknet. Komponenten A und B wurden bei RT als Granulat vorgemischt.

Es wurden folgende Messungen durchgeführt

Die Schlagzähigkeit wurde bei 23°C gemäß ISO 179/1eU gemessen. Der E-Modul wurde gemäß ISO 527-2 gemessen.

Die Wärmeformbeständigkeit wurde gemäß ISO 75A und ISO 75 B bestimmt und die Vicat Erweichungstemperatur gemäß ISO 306.

Die Belagbildung (fogging) wurde wie folgt bestimmt:

Die Apparatur bestand aus einem Metallkasten (I = 100 mm; b = 72 mm; h = 120 mm) in deren Boden sich links und rechts je eine H1 (24V, 60W)-Birne befindet. Diese waren angeschlossen an ein 0 bis 30V einstellbares, 10A-Netzgerät.

Über den Lampen befand sich eine 2 mm-dicke Metallplatte. Im Probenraum war ein Temperaturfühler angebracht, mit dem die Hitze im Innenraum kontrolliert wurde. Der Metallkasten wurde abgedeckt von einer ca. 4 mm-dicken Glasplatte.

Das Granulat (10 g) oder Musterplatte (30x60x2 mm bei 260°C Massetemperatur und 60°C Werzeugtemperatur hergestellt) wurden in der Apparatur auf 200°C erhitzt und 1 h bei 200°C gehalten. Die Glasabdeckung der Apparatur wurde zu Beginn des Versuchs und am Ende nach Abkühlung gewogen. Die Differenz der Massen entsprach dem Fogging-Belag.

Die Zusammensetzungen der Formmassen und die Ergebnisse der Messungen sind der Tabelle 1 zu entnehmen.

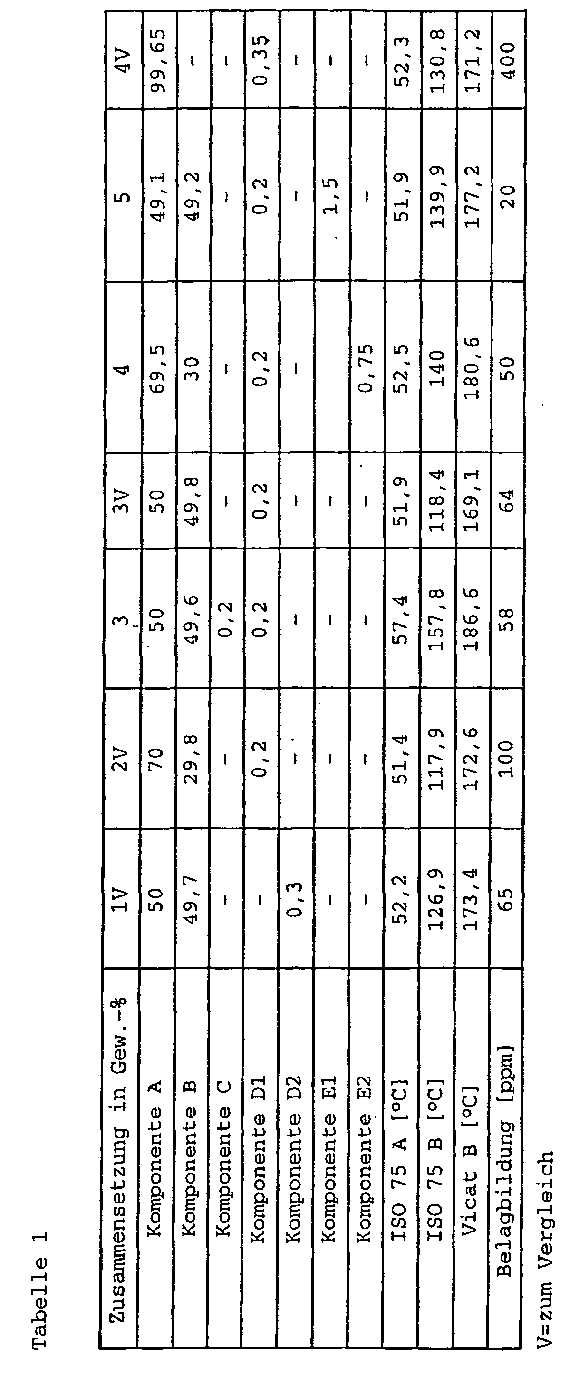

### Herstellung der Formmassen mit Wasser

Die Komponenten A) bis E) wurden in den in der Tabelle 2 angegebenen Mengenverhältnissen wie bereits vorstehend beschrieben konfektioniert. Beispiel I wurde ohne Wasserzugabe und die Beispiele II, III, IV mit 0,5 %, 1 % und 1,5 % Wasser (bezogen auf die Gesamteinsatzmenge 100 Gew.-% der Komponenten A) und B)) durchgeführt. Die Zugabe erfolgte mittels einer Pumpe in die Schmelze der Komponenten A) bis E).

Die Belagstärke wurde am Granulat 1. visuell und 2. nachfolgender Methode bestimmt:

Die Apparatur bestand aus einem Metallkasten (I = 100 mm; b = 72 mm; h = 120 mm) in deren Boden sich links und rechts je eine H1 (24V, 60W)-Birne befindet. Diese waren angeschlossen an ein 0 bis 30V einstellbares, 10A-Netzgerät.

Über den Lampen befand sich eine 2 mm-dicke Metallplatte. Im Probenraum war ein Temperaturfühler angebracht, mit dem die Hitze im Innenraum kontrolliert wurde. Der Metallkasten wurde abgedeckt von einer ca. 4 mm-dicken Glasplatte.

Das Granulat (10 g) oder Musterplatte (30x60x2 mm bei 260°C Massetemperatur und 60°C Werzeugtemperatur hergestellt) wurden in der Apparatur auf 200°C erhitzt und 1 h bei 200°C gehalten. Die Glasabdeckung der Apparatur wurde zu Beginn des Versuchs und am Ende nach Abkühlung gewogen. Die Differenz der Massen entsprach dem Fogging-Belag.

Die Zusammensetzungen der Formmassen und die Ergebnisse der Messungen sind der Tabelle 2 zu entnehmen.

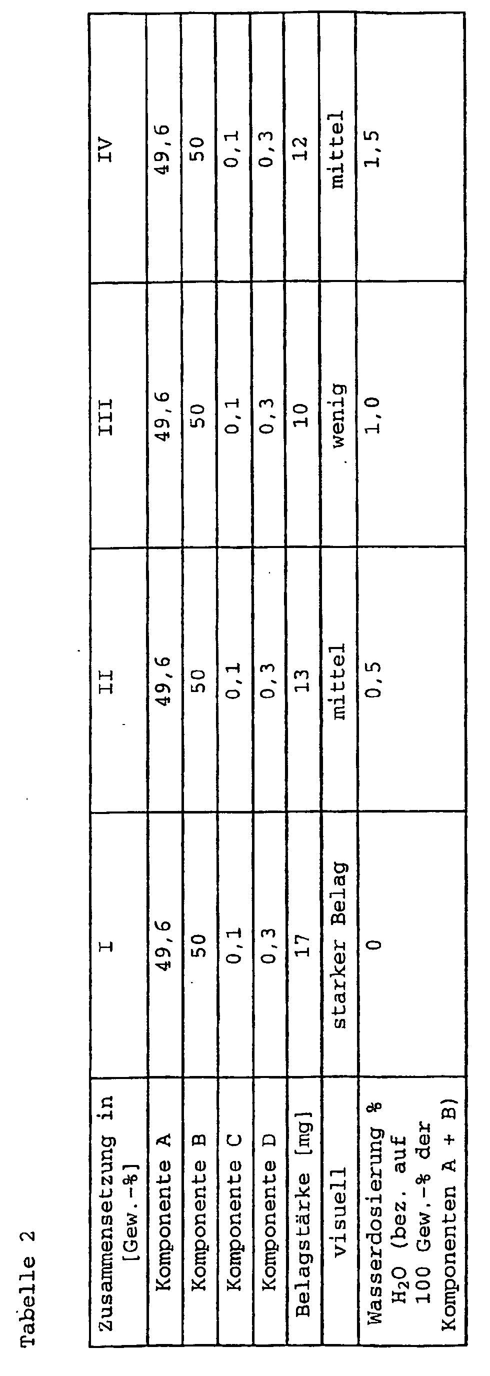

## Patentansprüche

1. Verfahren zur Herstellung von thermoplastischen Formmassen enthaltend
A) 10 bis 89,9 Gew.-% eines thermoplastischen Polyesters mit einer Viskositätszahl (VZ) von mindestens 145 ml/g
B) 10 bis 89,99 Gew.-% eines thermoplastischen Polyesters mit einer Viskositätszahl (VZ) von maximal 135 ml/g
C) 0,01 bis 5 Gew.-% mindestens eines Nukleierungsmittels
D) 0 ist 5 Gew.-% mindestens eines Schmiermittels
E) 0 bis 70 Gew.-% weiterer Zusatzstoffe, wobei die Summe der Gewichtsprozente der Komponenten A) bis E) 100 % ergibt,
**dadurch gekennzeichnet, dass** man die Komponenten A) bis C) sowie gegebenenfalls D) und/oder E) mischt, in Gegenwart von Wasser konfektioniert, entgast, austrägt, abkühlt und granuliert.

2. Verfahren nach Anspruch 1, **dadurch gekennzeichnet, dass** man 0,1 bis 2 Gew.-% Wasser einsetzt, bezogen auf 100 Gew.-% der Komponenten A) und B).

3. Verfahren nach den Ansprüchen 1 oder 2, **dadurch gekennzeichnet, dass** die Komponente B) eine VZ von mindestens 90 ml/g aufweist.

4. Verfahren nach den Ansprüchen 1 bis 3, **dadurch gekennzeichnet, dass** die Komponente C) aus Talkum aufgebaut ist.

5. Verfahren nach den Ansprüchen 1 bis 4, **dadurch gekennzeichnet, dass** die Komponente A) eine Carboxylendgruppenzahl von größer 15 mval/kg aufweist.

6. Verfahren nach den Ansprüchen 1 bis 5, **dadurch gekennzeichnet, dass** die Komponente B) eine COOH-Endgruppenzahl von kleiner 30 mval/kg aufweist.

## Claims

1. A process for preparing thermoplastic molding compositions comprising
A) from 10 to 89.9% by weight of a thermoplastic polyester with a viscosity number (VN) of at least 145 ml/g
B) from 10 to 89.99% by weight of a thermoplastic polyester with a viscosity number (VN) of not more than 135 ml/g
C) from 0.01 to 5% by weight of at least one nucleating agent
D) from 0 to 5% by weight of at least one lubricant
E) from 0 to 70% by weight of other additives, the total of the percentages by weight of components A) to E) being 100%,
which comprises mixing components A) to C), and also, if appropriate, D) and/or E), compounding them in the presence of water, and devolatilizing, discharging, cooling, and pelletizing the product.

2. The process according to claim 1, wherein use is made of from 0.1 to 2% by weight of water, based on 100% by weight of components A) and B).

3. The process according to claim 1 or 2, wherein component B) has a VN of at least 90 ml/g.

4. The process according to any of claims 1 to 3, wherein component C) is composed of talc.

5. The process according to any of claims 1 to 4, wherein component A) has a carboxy end group value of more than 15 mval/kg.

6. The process according to any of claims 1 to 5, wherein component B) has a COOH end group value smaller than 30 mval/kg.

## Revendications

1. Procédé de préparation de masses de moulage thermoplastiques contenant
A) 10 à 89,9 % en poids d'un polyester thermoplastique présentant un indice de viscosité (IV) d'au moins 145 ml/g,
B) 10 à 89,99 % en poids d'un polyester thermoplastique présentant un indice de viscosité (IV) d'au maximum 135 ml/g,
C) 0,01 à 5 % en poids d'au moins un agent de nucléation,
D) 0 à 5 % en poids d'au moins un lubrifiant,
E) 0 à 70 % en poids d'autres additifs, la somme des % en poids des composants A) à E) donnant 100 %,
**caractérisé en ce qu'**on mélange les composants A) à C) ainsi qu'éventuellement D) et/ou E), on les confectionne en présence d'eau, les dégaze, les décharge, les refroidit et les granule.

2. Procédé suivant la revendication 1, **caractérisé en ce qu'**on met en oeuvre 0,1 à 2 % en poids d'eau, par rapport à 100 % en poids des composants A) et B).

3. Procédé suivant la revendication 1 ou 2, **caractérisé en ce que** le composant B) présente un IV d'au moins 90 ml/g.

4. Procédé suivant les revendications 1 à 3, **caractérisé en ce que** le composant C) est constitué de talc.

5. Procédé suivant les revendications 1 à 4, **caractérisé en ce que** le composant A) présente un nombre de groupes terminaux carboxyle supérieur à 15 méq/kg.

6. Procédé suivant l'une des revendications 1 à 5, **caractérisé en ce que** le composant B) présente un indice de groupes terminaux COOH inférieur à 30 méq/kg.
